# EUROPÄISCHE PATENTSCHRIFT

(11) **EP 1 369 728 B1**
(45) Veröffentlichungstag und Bekanntmachung des Hinweises auf die Patenterteilung: **02.08.2006**
(21) Anmeldenummer: 03011484.7
(22) Anmeldetag: 21.05.2003
(51) Int. Cl.: G02B 21/00

(54) **Vorrichtung zur Dioptrieneinstellung von Mikroskopen**
Device for diopter setting in a microscope
Dispositif de régulation dioptrique d'un microscope

(30) Priorität: 04.06.2002 DE 10224628
(43) Veröffentlichungstag der Anmeldung: 10.12.2003
(73) Patentinhaber: Leica Microsystems (Schweiz) AG, 9435 Heerbrugg (CH)
(72) Erfinder: Déverin, Jacques Alain, Dr., 9443 Widnau (CH)
(74) Vertreter: Rosenich, Paul

(56) Entgegenhaltungen:
- WO-A-96/28752
- US-A- 4 786 154
- US-A- 5 135 299
- US-A1- 2001 050 808

## Beschreibung

Die Erfindung betrifft ein Mikroskop, insbesondere ein Operationsmikroskop, mit einer Einstellungshilfe zur Sehfehler-Korrektur für die Augen eines Beobachters.

Die Okulare eines Mikroskops sind in der Regel mit einer Dioptrieneinstellung versehen, damit auch Beobachter mit einem Sehfehler über einen längeren Zeitraum hinweg ermüdungsfrei scharf sehen können. Die nötige Einstellung kann dabei grundsätzlich auf zwei verschiedene Arten vorgenommen werden: Entweder man verstellt das Okular in Kenntnis des Dioptrienwerts des Beobachters oder der Beobachter verstellt das Okular während er durchschaut, so dass er scharf sieht. Bei der ersten Variante ist es von Nachteil, dass der Sehfehler bei der Voreinstellung unbekannt ist.

Zur Verbesserung dieses Umstandes werden im Stand der Technik sogenannte Fokussierstrichmarken bzw. Fadenkreuze verwendet. Diese Fadenkreuze, auf sogenannten Strichplatten angebracht, sind normalerweise in der Ebene des Zwischenbildes angeordnet.

Wenn nun ein Beobachter mit einem großen Sehfehler durch das Okular hindurchblickt, so liegt seine persönliche Sichtebene, in der er scharf sieht, mit großer Wahrscheinlichkeit außerhalb desjenigen Bereichs, in dem die Tubuslinse des Mikroskops das Objektbild (= sogenanntes Zwischenbild des Mikroskops) erzeugt. Das zwingt den Beobachter, seine Sichtebene mittels des Okulars so zu verstellen, dass sie innerhalb dieses Bereichs zu liegen kommt. Dies sollte idealerweise da der Fall sein, wo auch die Strichplatte mit dem Fadenkreuz liegt, weil diese Ebene der Nullstellung des Mikroskops entspricht. Hierbei ist es jedoch möglich, dass der Beobachter das Objektbild schon scharf sieht; aber nur deshalb, weil das Auge sich an das Bild des Fadenkreuzes akkomodiert hat. Das wiederum hat zur Folge, dass der Beobachter meint, sein Sichtbild und das Zwischenbild des Mikroskops würden übereinstimmen, wenn es aber aufgrund eines Akkomodationsprozesses des Auges an das Fadenkreuzbild (= Ort, wo optimales Zwischenbild = Nullstellung des Mikroskops) nicht übereinstimmt, so sieht der Beobachter zwar scharf, aber zusätzliche Ausgänge - wie etwa für Kameras, Assistenten oder dergleichen - werden mit einem unscharfen Bild versorgt. Das wiederum macht an diesen Ausgängen separate Feinfokussierungen erforderlich. Dieses ist von der technischen und auch von der kostenmäßigen Seite ein erheblicher Nachteil. Außerdem kann der Akkomodationsprozess des Auges zu einer Anstrengung des Sehapparates des Benutzers führen.

Ein weiterer Nachteil der bisherigen Lösungen, bei welchen ein Fadenkreuz mittels einer Strichplatte erzeugt wird, ist die ständige Sichtbarkeit des Fadenkreuzes. Sobald nämlich die Einstellung des Mikroskops vorgenommen worden ist, sollten keine weiteren Einstellungen nötig sein und demzufolge behindert das Fadenkreuz nur die freie Sicht auf das Objekt.

Die Druckschrift WO-A-96/28752 zeigt eine weitere Möglichkeit zur Adaption der optischen Eigenschaften des Strahlengangs in Mikroskop an die optischen Eigenschaften der Anwenderangen, indem eine beleuchtete Fokussiermarke in den Strahlengang des Mikroskops integriert wurde.

Aufgabe der vorliegenden Erfindung ist es, die oben genannten Nachteile zu vermeiden.

Der Erfinder erkannte, dass man diesen Nachteil durch das Zur-Verfügung-Stellen einer anderweitigen Hilfe zum Dioptrienausgleich beseitigen kann. Daher wird diese Aufgabe dadurch gelöst, dass die Strichplatte von dem Ort, wo das Zwischenbild erzeugt wird, entfernt wird und eine Fokussiermarke mittels einer Lichtquelle an besagtem Ort kurzzeitig eingeblendet wird.

Durch das kurzzeitige Einblenden des Fadenkreuzes ist nämlich gewährleistet, dass keine Akkomodation des Auges auf das Fadenkreuz stattfinden kann. Somit ist wiederum gewährleistet, dass dem Beobachter eine bestmögliche Kontrolle zur Verfügung steht, welche verhindert, dass seine Sichtebene nicht mit dem Zwischenbild (= Nullstellung des Mikroskops = Ort der Fadenkreuz-Einblendung) übereinstimmt. Somit entfällt die Notwendigkeit einer Feinfokussierung am Zubehör, wie z. B. Kameras, Videogeräten etc.

Des Weiteren steht dem Beobachter eine optimale Einstellungshilfe zur Verfügung und somit werden Überanstrengungen des Auges durch Akkomodation vermieden.

Um den Nachteil der ständigen und deshalb störenden Sichtbarkeit des Fadenkreuzes zu vermeiden, sieht die erfindungsgemäße Lösung vor, das Fadenkreuz nur kurzzeitig bei Bedarf in das Sichtfeld des Beobachters einzubringen. Das kann grundsätzlich durch eine manuelles Ein- und Ausschalten einer Lichtquelle geschehen, oder aber auch dadurch, dass die Umlenkelemente von Hand entfernt bzw. weggeklappt werden. Hierbei ist unter Umlenkelementen im Sinne dieser Erfindung jedes Element zu verstehen, mit welchem Lichtstrahlen umgelenkt werden können. Dies können z.B. Spiegel, Prismen, teilweise lichtdurchlässige Scheiben o.ä. sein.

Als Lichtquelle wird erfindungsgemäß eine rote LED-Beleuchtung bevorzugt; farbliche Varianten und verschiedene Arten von Lichtquellen sind indes auch verwendbar

Eine weitere bevorzugte Ausgestaltung der Erfindung sieht vor, dass die Einblendung der Fokussiermarke automatisch ein- und ausgeschaltet wird. Zum Einschalten wären verschiedenste Lösungen denkbar, etwa sensorgesteuerte Lösungen, die einschalten, sobald ein Beobachter durch das Okular blickt, oder mechanisch-elektrische Lösungen, die dann einschalten, wenn der Fokussierring des Okulars bewegt wird.

Zum Ausschalten der Einblendung wären z. B. Zeitschaltungen denkbar, welche die Stromzufuhr der Lichtquelle unterbrechen oder mechanisch die Umlenkelemente wegklappen. Optoelektrische oder optoelektronische oder auch Netzhaut scannende Varianten sind hierfür ebenfalls in Betracht zu ziehen.

Aus Gründen der Platzersparnis und einfachsten technischen Realisierbarkeit ist es in vorliegender Erfindung bevorzugt, dass die Einblendvorrichtung im unteren Teil des Mikroskops - vorzugsweise unterhalb des Vergrößerungswechslers und oberhalb des Hauptobjektivs - angebracht ist. Denkbar sind jedoch auch die Anbringungsorte oberhalb des Vergrößerungswechslers oder oberhalb der Zubehör-Ein- und Ausgänge oder auch eine Verwendung der Zubehör-Eingänge selbst.

Sämtliche Beschreibungen der Aufbauten und Darstellungen sind auf die Realisierung in einem Stereo-Operationsmikroskop bezogen und deshalb jeweils paarweise zu verstehen. Andererseits kann die Erfindung auch bei allen sonstigen Mikroskop-Varianten eingesetzt werden.

Anhand von Figuren wird die Erfindung symbolisch und beispielhaft näher erläutert. Die Figuren werden zusammenhängend und übergreifend beschrieben. Gleiche Bezugszeichen bedeuten gleiche Bauteile, Bezugszeichen mit unterschiedlichen Indices geben funktionsgleiche Bauteile an.

Es zeigen in schematischer Darstellung
Fig. 1: einen erfindungsgemäßen Mikroskopaufbau,
Fig.2: die gleiche Darstellung eines Mikroskopaufbaus mit einem anderen Anbringungsort der Einblendvorrichtung und
Fig. 3: die gleiche schematische Darstellung eines Mikroskopaufbaus mit einem weiteren Anbringungsort der Einblendvorrichtung.

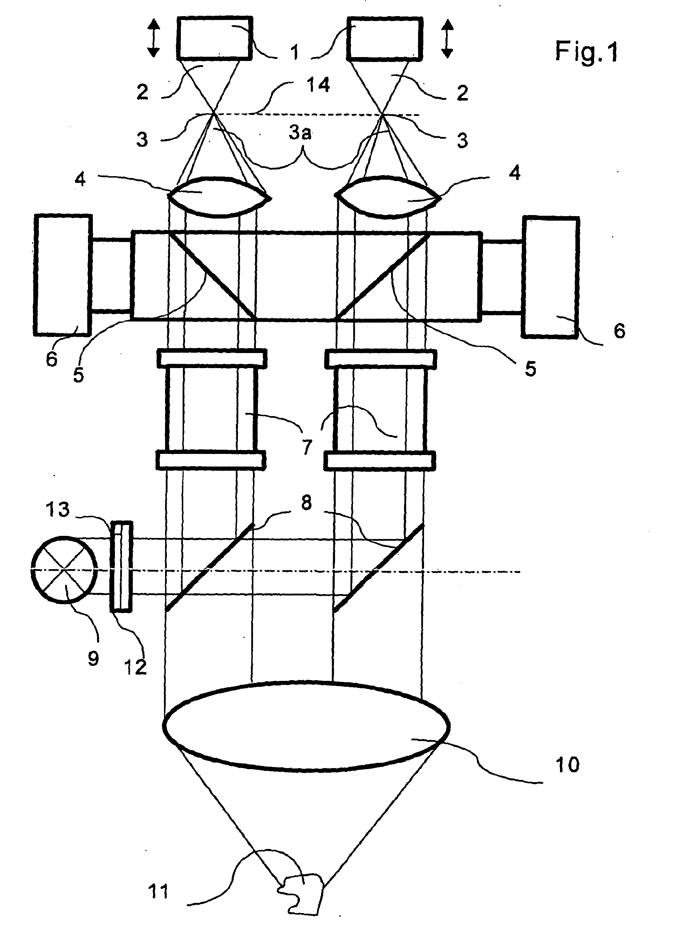

Aus Fig.1 ist ersichtlich, dass das Mikroskop über ein Binokular, d.h. ein Paar - hier verstellbar ausgestalteter - Okulare 1 verfügt, sodass die Sichtebene 3 der Zwischenbild-Ebene 14 angepasst werden kann. Die Zwischenbild-Ebene 14 - also das Objektbild aus dem jeweiligen Strahlengang 2 - wird durch die Tubuslinsen 4 erzeugt. In diese Ebene wird idealerweise auch das Einblendungsbild 3a eingeblendet.

Des Weiteren verfügt das Mikroskop über Umlenkelemente 5, welche die Zubehör-Ausgänge 6 mit Lichtstrahlen versorgen, oder auch umgekehrt, im Falle der Einblendung durch in diesem Fall Zubehör-Eingänge 6 die von außen erhaltenen Lichtstrahlen in den Strahlengang 2 umlenken. Die Strahlengänge 2 verlaufen durch Vergrößerungswechsler 7 und durch ein weiteres, paarweise angeordnetes Umlenkelement 8, über welches die Einblendung einer Fokussiermarke 13 erfolgt. Dieses kommt dadurch zustande, dass die Lichtquelle 9 durch eine Strichplatte 12 hindurch scheint. Die beiden Strahlengänge 2 werden durch das Hauptobjektiv 10 erzeugt, welches auf das zu betrachtende Objekt 11 - beispielsweise einen Patienten - ausgerichtet ist.

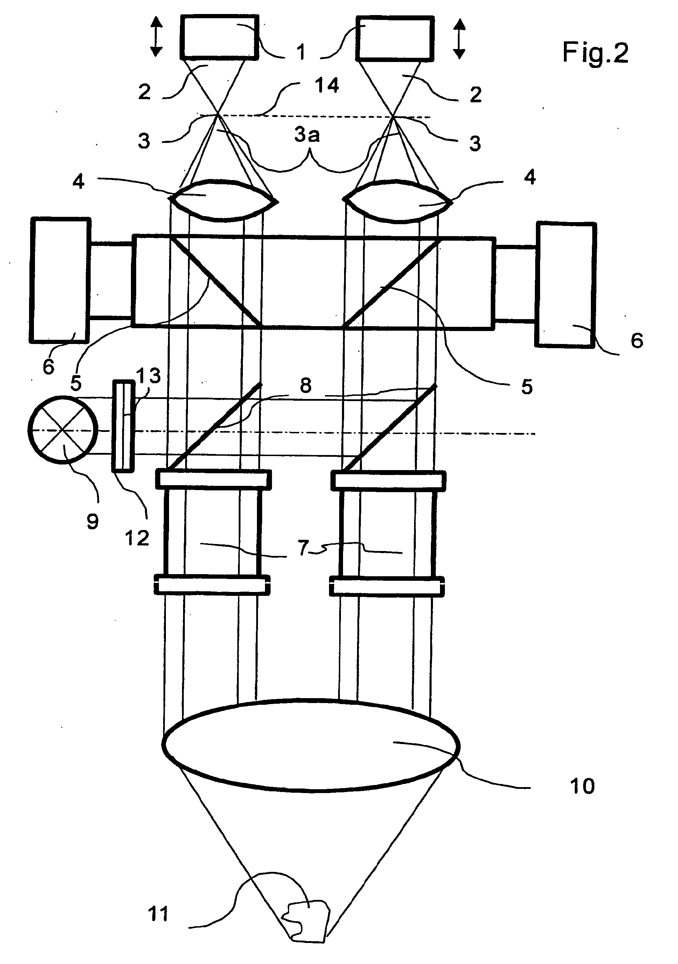

In Fig. 2 ist der gleiche Mikroskopaufbau dargestellt, wobei hier die Einblendvorrichtung der Fokussiermarke 13 mittels Lichtquelle 9, Strichplatte 12 und Umlenkelementen 8 an einem anderen Ort als in Fig. 1 angebracht ist.

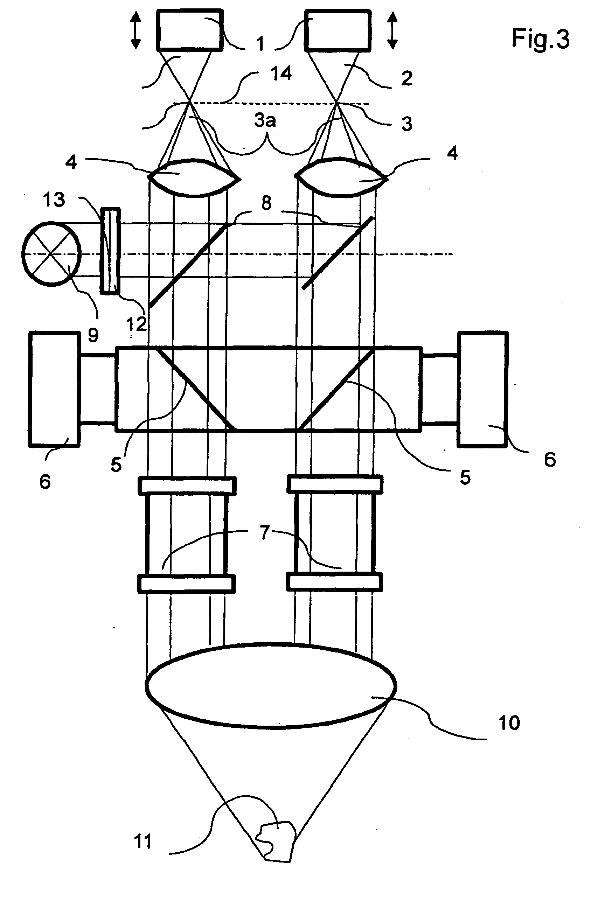

In Fig. 3 ist ein weiterer möglicher Anbringungsort der Einblendvorrichtung dargestellt, welche aus Lichtquelle 9, Strichplatte 12 mit Fokussiermarke 13 und Umlenkelementen 8 besteht.

### Bezugszeichenliste

- 1 -: Verstellbares Okular
- 2 -: Hauptstrahlengang
- 3 -: Zwischenbild des Mikroskops (Objektbild)/Sichtebene
- 3a -: Einblendungsbild (Strichmarkenbild)
- 4 -: Tubuslinse
- 5 -: Umlenkelement des Zubehörs
- 6 -: Zubehör-Ein- oder -Ausgang
- 7 -: Vergrößerungswechsler
- 8 -: Umlenkelement der Einblendvorrichtung
- 9 -: Lichtquelle
- 10 -: Hauptobjektiv
- 11 -: Objekt
- 12 -: Strichplatte
- 13 -: Fokussiermarke
- 14 -: Zwischenbild-Ebene

## Patentansprüche

1. Mikroskop, insbesondere Operationsmikroskop, mit einer Einstellungshilfe zur Sehfehler-Korrektur mit zwei HauptstrahJengängen (2), die mindestens ein Hauptobjektiv (10), einen Vergrößerungswechsler (7), mindestens ein Umlenkelement (5) für einen Zubehör-Anschluss (6), mindestens eine Tubuslinse (4), eine Zwlschenbild-Ebene (3) und je ein Okular (1) durchsetzen;
mit einer Einblendvorrichtung für eine Fokussiermarke (13), die mittels einer Lichtquelle (9), und mindestens einem weiteren Umlenkelement (8) in mindestens einen Hauptstrahlengang (2) als Bild (3a) einblendbar ist,
**dadurch gekennzeichnet, dass** die Fokussiermarke (13) bei Bedarf in der Zwischenbild-Ebene (3) als Bild, abgebildet wird
und dass das weitere Umlenkelement (B) unterhalb der Tubusllnse (4) in den Hauptstrahlengang (2) einklappbar bzw. aus dem Hauptstrahlengang (2) entfernbar angeordnet ist.

2. Mikroskop nach Anspruch 1, **dadurch gekennzeichnet, dass** die Lichtquelle (9) als eine LED-Beleuchtung und/oder ein Bild eines Video-Displays und/oder als ein Hilfskollimator ausgestaltet ist.

3. Mikroskop nach Anspruch 1 oder 2, **dadurch gekennzeichnet, dass** die Lichtquelle (9) farblich ausgestaltet ist.

4. Mikroskop nach einem der vorhergehenden Ansprüche, **dadurch gekennzeichnet, dass** die Einblendung der Fokussiermarke (13) automatisch ein- bzw. ausschaltbar ist.

5. Mikroskop nach einem der vorhergehenden Ansprüche, **dadurch gekennzeichnet, dass** Zubehör-Ein- oder Ausgänge (6) fokussiereinrichtungsfrei sind.

6. Mikroskop nach einem der vorhergehenden Ansprüche, **dadurch gekennzeichnet, dass** das Umlenkelement (8) als Prisma und/oder Spiegel und/oder teilweise lichtdurchlässiges Element ausgestaltet ist.

7. Mikroskop nach einem der vorhergehenden Ansprüche, **dadurch gekennzeichnet, dass** die Einblendvorrichtung mit wenigstens ihrer Lichtquelle (9), der Strichplatte (12) und dem Umlenkelement (8) zwischen dem Hauptobjektiv (10) und dem Vergrößerungswechsler (7) angeordnet ist.

8. Mikroskop nach einem der vorhergehenden Ansprüche, **dadurch gekennzeichnet, dass** die Einblendvorrichtung mit wenigstens ihrer Lichtquelle (9), der Strichplatte (12) und dem Umlenkelement (8) zwischen dem Vergrößerungswechsler (7) und den Zubehör-Ein- oder -Ausgängen (6) angeordnet ist.

9. Mikroskop nach einem der vorhergehenden Ansprüche, **dadurch gekennzeichnet, dass** die Einblendvorrichtung mit wenigstens ihrer Lichtquelle (9), der Strichplatte (12) und dem Umlenkelement (8) zwischen den Zubehör-Ein- oder -Ausgängen (6) und den Tubuslinsen (4) angeordnet ist.

10. Mikroskop nach einem der vorhergehenden Ansprüche, **dadurch gekennzeichnet, dass** die Einblendvorrichtung mit wenigstens ihrer Lichtquelle (9), der Strichplatte (12) und dem Umlenkelement (8) und/oder dem Umlenkelement (5) an den Zubehör-Ein- oder -Ausgängen (6) selbst angeordnet ist.

## Claims

1. Microscope, in particular a surgical microscope, having a focusing aid for vision defect correction, having two main beam paths (2) which traverse at least one main objective (10), a magnification changer (7), at least one deflecting element (5) for an accessory connection (6), at least one tube lens (4), an intermediate image plane (3) and one eyepiece (1) each; and having a superimposing device for a focusing mark (13) which can be superimposed as image (3a) into at least one main beam path (2) by means of a light source (9) and at least one further deflecting element (8), **characterized in that** the focusing mark (13) is imaged as image in the intermediate image plane (3) if required, and **in that** the further deflecting element (8) is arranged below the tube lens (4) such that it can be folded into the main beam path (2) or removed from the main beam path (2).

2. Microscope according to Claim 1, **characterized in that** the light source (9) is configured as an LED illumination and/or an image of a video display and/or as an auxiliary collimator.

3. Microscope according to Claim 1 or 2,
**characterized in that** the light source (9) is of coloured configuration.

4. Microscope according to one of the preceding claims, **characterized in that** the superimposition of the focusing mark (13) can be switched in or out automatically.

5. Microscope according to one of the preceding claims, **characterized in that** the accessory inputs or outputs (6) are free from focusing devices.

6. Microscope according to one of the preceding claims, **characterized in that** the deflecting element (8) is configured as a prism and/or mirror and/or partially transparent element.

7. Microscope according to one of the preceding claims, **characterized in that** the superimposing device is arranged with at least its light source (9), the reticle (12) and the deflecting element (8) between the main objective (10) and the magnification changer (7).

8. Microscope according to one of the preceding claims, **characterized in that** the superimposing device is arranged with at least its light source (9), the reticle (12) and the deflecting element (8) between the magnification changer (7) and the accessory inputs or outputs (6).

9. Microscope according to one of the preceding claims, **characterized in that** the superimposing device is arranged with at least its light source (9), the reticle (12) and the deflecting element (8) between the accessory inputs or outputs (6) and the tube lenses (4).

10. Microscope according to one of the preceding claims, **characterized in that** the superimposing device is arranged with at least its light source (9), the reticle (12) and the deflecting element (8) and/or the deflecting element (5) at the accessory inputs or outputs (6).

## Revendications

1. Microscope, en particulier microscope d'opérations, comportant une aide au réglage destinée à corriger des défauts de la vision, avec deux trajectoires des rayons principaux (2), lesquelles traversent au moins un objectif principal (10), un changeur de grossissement (7), au moins un élément de déviation (5) destiné au branchement d'un accessoire (6), au moins une lentille tube (4), un plan d'image intermédiaire (3) et chacune un oculaire (1), un dispositif de superposition destiné à un repère de mise au point (13), lequel peut être superposé en tant qu'image (3a) au moins dans une trajectoire des rayons principaux (2) au moyen d'une source lumineuse (9) et d'au moins un autre élément de déviation (8), **caractérisé en ce que** le repère de mise au point (13) est représenté en cas de besoin en tant qu'image dans le plan d'image intermédiaire (3) et **en ce que** l'autre élément de déviation (8) est disposé au-dessous de la lentille tube (4) de façon à pouvoir être rabattu dans la trajectoire des rayons principaux (2) ou être écarté de la trajectoire des rayons principaux (2).

2. Microscope selon la revendication 1, **caractérisé en ce que** la source lumineuse (9) est conformée en tant qu'éclairage LED et/ou en tant qu'image d'un affichage vidéo et/ou en tant que collimateur auxiliaire.

3. Microscope selon la revendication 1 ou 2, **caractérisé en ce que** la source lumineuse (9) est conformée en couleur.

4. Microscope selon l'une quelconque des revendications précédentes, **caractérisé en ce que** la superposition du repère de mise au point (13) peut être activée ou selon le cas désactivée automatiquement.

5. Microscope selon l'une quelconque des revendications précédentes, **caractérisé en ce que** l'entrée ou la sortie (6) de l'accessoire est indépendante du dispositif de mise au point.

6. Microscope selon l'une quelconque des revendications précédentes, **caractérisé en ce que** l'élément de déviation (8) est conformé en tant que prisme et/ou en tant que miroir et/ou en tant qu'élément partiellement translucide.

7. Microscope selon l'une quelconque des revendications précédentes, **caractérisé en ce que** le dispositif de superposition est disposé avec au moins sa source lumineuse (9), le porte-réticule (12) et l'élément de déviation (8) entre l'objectif principal (10) et le changeur de grossissement (7).

8. Microscope selon l'une quelconque des revendications précédentes, **caractérisé en ce que** le dispositif de superposition est disposé avec au moins sa source lumineuse (9), le porte-réticule (12) et l'élément de déviation (8) entre le changeur de grossissement (7) et l'entrée ou la sortie (6) de l'accessoire.

9. Microscope selon l'une quelconque des revendications précédentes, **caractérisé en ce que** le dispositif de superposition est disposé avec au moins sa source lumineuse (9), le porte-réticule (12) et l'élément de déviation (8) entre l'entrée ou la sortie (6) de l'accessoire et les lentilles tubes (4).

10. Microscope selon l'une quelconque des revendications précédentes, **caractérisé en ce que** le dispositif de superposition est disposé avec au moins sa source lumineuse (9), le porte-réticule (12) et l'élément de déviation (8) et/ou l'élément de déviation (5) à l'entrée ou la sortie (6) même de l'accessoire.
